(19) Europäisches Patentamt

European Patent Office

Office européen des brevets

(11) **EP 0 537 831 B1**

(12) **FASCICULE DE BREVET EUROPEEN**

(45) Date de publication et mention
de la délivrance du brevet:
**10.05.2000 Bulletin 2000/19**

(51) Int. Cl.⁷: **B01D 53/04**, C01B 13/02

(21) Numéro de dépôt: **92203048.1**

(22) Date de dépôt: **05.10.1992**

(54) **Procédé de production d'un gaz à teneur substantielle en oxygène**

Verfahren zur Herstellung eines Gases mit hohem Sauerstoffgehalt

Process for producing a gas with high oxygen content

(84) Etats contractants désignés:
**BE DE ES FR IT NL SE**

(30) Priorité: **17.10.1991 FR 9112806**

(43) Date de publication de la demande:
**21.04.1993 Bulletin 1993/16**

(73) Titulaire:
**L'AIR LIQUIDE, SOCIETE ANONYME POUR
L'ETUDE ET L'EXPLOITATION DES PROCEDES
GEORGES CLAUDE
75321 Paris Cédex 07 (FR)**

(72) Inventeurs:
• **Hay, Léon**
  **F-75013 Paris (FR)**

• **Eteve, Sylvie**
  **F-92260 Fontenay-aux-Roses (FR)**

(74) Mandataire: **Polus, Camille et al
c/o Cabinet Lavoix
2, Place d'Estienne d'Orves
75441 Paris Cedex 09 (FR)**

(56) Documents cités:
**EP-A- 0 248 720        EP-A- 0 350 373
FR-A- 2 633 846**

Remarques:
Le dossier contient des informations techniques
présentées postérieurement au dépôt de la
demande et ne figurant pas dans le présent
fascicule.

**Description**

La présente invention concerne la production de gaz enrichi en oxygène à partir d'air et par adsorption, selon un procédé type "PSA" (pressure swing adsorption") fonctionnant entre une pression haute $P_M$ et une pression basse $P_m$ inférieure à la pression atmosphérique obtenue par pompage.

Les installations de ce type destinées à la production industrielle d'oxygène par fractionnement de l'air sur zéolites, par exemple de type 5A ou 13X, fournissent de l'air enrichi en oxygène jusqu'à des teneurs en oxygène de 95 % (les 5 % résiduels étant essentiellement constitués d'argon).

Dans un grand nombre d'applications, une qualité de production à 90/93 % de teneur en oxygène est cependant suffisante. Dans cette même gamme de teneurs, les quantités d'oxygène exigées par l'application peuvent aller de quelques tonnes/jour à quelques centaines de tonnes/jour.

Ces installations industrielles connues se sont développées dans la gamme 10 à 50 T/j d'oxygène, où elles sont apparues très compétitives en coût de revient par rapport à l'oxygène obtenu par voie cryogénique et approvisionné sous forme liquide.

Les différents types de cycles proposés dans ces installations comprennent généralement de deux à quatre adsorbeurs dont l'un est en production, tandis que l'autre (ou les autres) sont soit en régénération soit en phase intermédiaire (balayage, remise en pression...).

Les cycles ayant une durée généralement comprise entre 90 secondes et quelques minutes, le volume des adsorbeurs pour un cycle donné et une durée déterminée croît proportionnellement au débit à produire. Le respect des règles de vitesse de passage du gaz dans certaines phases, pour éviter l'attrition de l'adsorbant, impose une section minimale à la traversée du gaz, ce qui, pour des grandes tailles devient directement ou indirectement le facteur limitant. Pour les adsorbeurs à géométrie cylindrique verticale et circulation verticale de gaz, c'est le diamètre des adsorbeurs qui devient excessif audelà d'une certaine taille d'appareil (limitation du diamètre des fonds et viroles, problèmes de transport...).

Pour les adsorbeurs à géométrie cylindrique horizontale et circulation verticale de gaz, qui permettent de passer des débits plus grands que dans le cas précédent, à égalité de diamètre, le passage aux grands débits, soulève les problèmes de distribution du gaz dans les collecteurs internes de part et d'autre de l'adsorbant, ainsi que l'augmentation des volumes morts dans ces collecteurs. EP-A-0500416, citable sous l'article 54(3) CBE propose un cycle "PSA" dans lequel la durée d'une étape de pompage est au moins égale à la durée de l'étape de production. Or, des phénomènes cinétiques requièrent pour certaines phases des durées minimales pour éviter une dégradation des performances, ce qui détermine pour un adsorbant de granulométrie déterminée, une durée de cycle optimale. Dans certains cas, la solution de EP-A-0500416 ne fait qu'aggraver le problème.

Compte tenu des contraintes d'attrition, de cinétique et des limitations technologiques, on peut estimer à environ 60 T/j la limitation d'une telle installation de production d'oxygène.

Dans le cas où une application exige des quantités en air suroxygéné plus importantes, par exemple 300 T/j, la solution actuelle est, soit d'installer plusieurs unités en parallèle (par exemple 3 unités de 50 T/j chacune pour une production de 150 T/j), soit de passer à la solution par voie cryogénique.

Le problème que l'invention vise à résoudre est de repousser les limites actuelles en tonnage des installations de production d'oxygène industriel, avec un coût de production plus faible que celui qui résulterait de la mise en parallèle de plusieurs unités indépendantes. Plus précisément, l'invention a pour objet de produire sur une seule unité, une quantité d'oxygène qui pourrait être très supérieure à 60 T/j, ce qui, dans le coût de production, diminue la part de frais fixes (génie civil, engineering, montage, démarrage) mais également réduit la part d'investissement (matériel, adsorbant...) par rapport au coût résultant de la juxtaposition de plusieurs unités.

Ces objectifs de l'invention sont atteints, dans un procédé tel que défini dans la revendication 1

Des modes de mise en oeuvre avantageux sont définis dans les revendications 2 à 8.

Par système de pompage, on entend soit une pompe et son moteur qui lui est propre, soit un étage ou corps de pompe et dans ce cas, plusieurs systèmes de pompage peuvent être reliés à un moteur unique, soit encore plusieurs pompes montées en parallèle et pompant à un instant donné le gaz d'un seul et même adsorbeur.

Le gaz de dépressurisation, introduit à contre-courant selon l'étape c) est du gaz de dépressurisation initiale d'un autre adsorbeur et/ou du gaz de production d'encore au moins un autre adsorbeur. Le cas échéant, une partie du gaz de repressurisation selon c) est constituée d'air introduit à co-courant.

La pression maximale de cycle est généralement comprise entre la pression atmosphérique et $1,6.10^5$ Pascal, tandis que la pression minimale de cycle est comprise entre $0,2.10^5$ et $0,5.10^5$ Pascal.

EP-A-0248720 décrit une installation PSA á durée de production allongée réalisant un procédé conforme au préambule de la revendication 1 mais dépourvu de tout système de pompage.

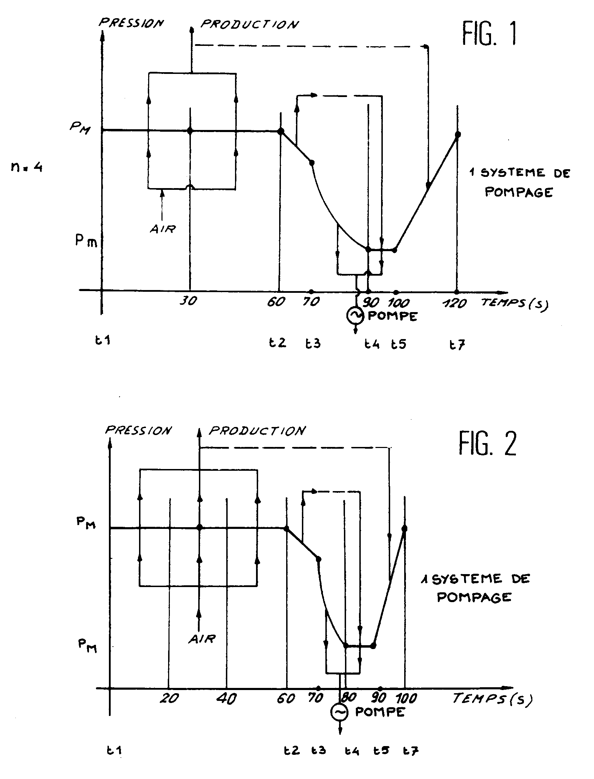

L'invention est maintenant décrite en référence aux dessins annexés, dont les figures 1 à 8 représentent chacune un cycle opératoire "pression (ordonnée)-temps (abscisse)" pendant une durée T par un adsorbeur d'un groupe de n adsorbeurs opérant successivement avec un déphasage T/n.

De façon usuelle, on rappelle qu'on utilise les expressions "co-courant" et "contre-courant" lorsque le gaz circule dans l'adsorbeur, respectivement de l'orifice d'entrée du mélange à traiter vers l'orifice de sortie du gaz de production et vice-versa respectivement. Sur les diagrammes de pression, le sens co-courant s'étend vers le haut du feuillet parallèlement à l'axe des ordonnées "(pression)", tandis que le sens contre-courant lui est opposé. Lorsque la flèche indicatrice du sens d'écoulement gazeux traverse le diagramme, cela signifie que le gaz traverse l'adsorbeur d'un orifice (entrée ou sortie) à l'autre (sortie ou entrée respectivement). Lorsque la flèche prend naissance ou aboutit sur le diagramme, cela signifie que l'un des orifices est fermé, c'est-à-dire qu'il se vide ou se remplit respectivement.

Sur les dessins et dans la description ci-dessous on retrouve les abréviations et désignations suivantes :

T      durée - ou période - d'un cycle ;
n      nombre d'adsorbeurs d'un groupe d'adsorbeurs ;
T/n      déphasage entre deux adsorbeurs successifs ;
N      nombre adsorbeurs en production simultanée ;
t1      début de l'étape de production à co-courant ;
t2      fin de l'étape de production à co-courant ou début de l'étape éventuelle de dépressurisation initiale à co-courant ;
t3      fin de l'étape éventuelle de dépressurisation initiale à co-courant ou début de l'étape de dépressurisation à contre-courant ;
t4      fin de l'étape de dépressurisation à contre-courant, avant la purge-élution éventuelle ;
t5      fin de l'étape éventuelle de purge-élution ;
t6      fin de l'étape éventuelle de repressurisation partielle jusqu'à une pression intermédiaire ;
t7      fin de l'étape de repressurisation finale ;
d1      durée de l'étape de production à co-courant ;
d2      durée de l'étape de dépressurisation éventuelle à co-courant ;
d3      durée de la dépressurisation à contre-courant avant purge-élution éventuelle ;
d4      durée de la purge-élution ;
d5      durée de la repressurisation à contre-courant ;
d6      durée de la repressurisation à co-courant ;
d7      durée du pompage à contre-courant avec purge-élution éventuelle ;
k      nombre de système de pompage.

On se réfère maintenant aux différentes figures de 1 à 8, sur lesquelles des temps correspondant à la durée du cycle et des différentes étapes sont donnés à titre indicatif, sur la base d'un temps d'adsorption comportant l'admission d'air sur un adsorbeur fixé à 60 s ; ce temps étant généralement compris entre 30 et 120 s dans le cas de "PSA" oxygène industriels chargés d'adsorbant soit sous forme de billes de diamètre compris entre 1 et 3 mm, soit sous d'autres formes de granulométrie de diamètre équivalent.

Figure 1 : (ne fait pas partie de l'invention)

T sec    :120 sec
n    : 4
T/n    : 30
N    : 2
d1    : 60 sec
d2    : 10 sec
d3    : 20 sec
d4    : 10 sec
d5    : 20 sec
d7    : 30 sec
k    : 1

Ce cycle comporte quatre adsorbeurs dont deux adsorbeurs en production simultanée, chacun pendant une durée de 60 s et chaque adsorbeur est régénéré par pompage à contre-courant suivi d'élution pendant une durée de 30s, à l'aide d'un seul système de pompage, tout en assurant un fonctionnement continu dudit système de pompage.

Par rapport à ce cycle, avec un cycle de même type (même succession d'étapes, même temps d'adsorption de 60 secondes, fonctionnement en continu du système de pompage, même volume par adsorbeur) mais ne comportant qu'un seul adsorbeur en production à un instant quelconque de sa mise en oeuvre, on obtient un dispositif à trois adsorbeurs avec une production réduite de moitié.

Sans qu'il y ait perte sensible de rendement, ni augmentation sensible de la consommation énergétique par mètre cube d'oxygène produit, l'installation à quatre adsorbeurs de la figure n° 1 a la même production que deux installations séparées à trois adsorbeurs chacune, soit un gain en productivité de 50% et de plus on a multiplié la production limite par unité, d'un facteur 2.

<u>Figure 2 :</u> (ne fait pas partie de l'invention)

|     |          |
|-----|----------|
| T   | : 100 sec |
| n   | : 5      |
| T/n | : 20     |
| N   | : 3      |
| d1  | : 60 sec |
| d2  | : 10 sec |
| d3  | : 10 sec |
| d4  | : 10 sec |
| d5  | : 10 sec |
| d7  | : 20 sec |
| k   | : 1.     |

Le cycle de la figure 2 se distingue du précédent par un adsorbeur supplémentaire dans le groupe d'adsorbeurs, et également un adsorbeur supplémentaire en production continue. La durée de cycle T est raccourcie à 100 sec, alors que la durée de production d1 est conservée à 60 sec et que la durée de pompage d7 est réduite à 20 sec.

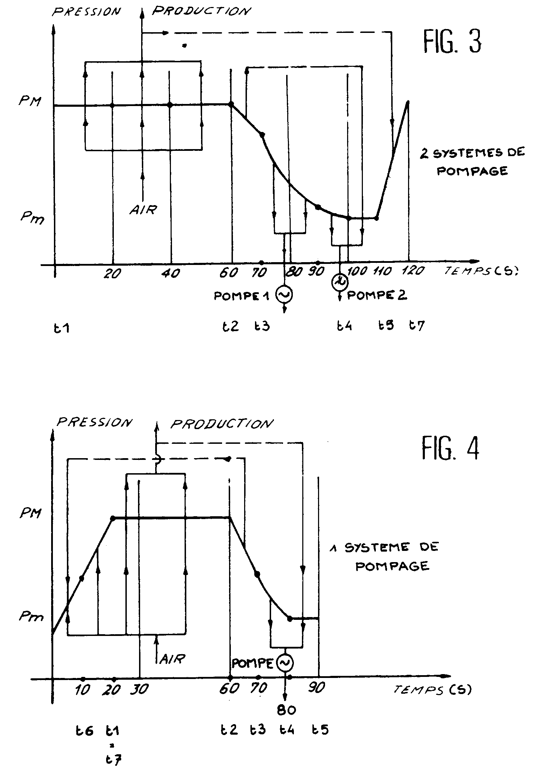

<u>Figure 3 :</u>

|     |          |
|-----|----------|
| T   | : 120 sec |
| n   | : 6      |
| T/N | : 20 sec |
| N   | : 3      |
| d1  | : 60 sec |
| d2  | : 10 sec |
| d3  | : 30 sec |
| d4  | : 10 sec |
| d5  | : 10 sec |
| d7  | : 40 sec |
| k   | : 2      |

Dans cette réalisation, la durée de pompage d7 de 40 sec, est double du déphasage T/n. On emploie donc deux systèmes de pompage (pompe N°1 et pompe N°2) qui fonctionnent en continu, chacun étant adapté à ses niveaux de pression d'aspiration et de refoulement.

<u>Figure 4 :</u> (ne fait pas partie de l'invention)

|     |                          |
|-----|--------------------------|
| T   | : 90 sec                 |
| n   | : 3                      |
| T/N | : 30 sec                 |
| N   | : successivement 1 puis 2 |
| d1  | : 40 sec                 |
| d2  | : 10 sec                 |
| d3  | : 10 sec                 |

d4      : 10 sec
d5      : 10 sec
d6      : 20 sec
d7      : 20 sec
k       : 1

Avec seulement trois adsorbeurs, la pompe unique fonctionne ici en discontinu pendant une durée d7 de 2/3 du déphasage. Par ailleurs, deux adsorbeurs sont simultanément en production, au moins à un instant donné correspondant à une fraction de la durée T/n de déphasage, un seul adsorbeur étant en production pendant la fraction restante.

On note que la repressurisation s'effectue ici, pendant 10 secondes, avec introduction de gaz aux deux extrémités de l'adsorbeur, à savoir avec de l'air à co-courant, et du gaz de dépressurisation initiale soutiré à co-courant d'un autre adsorbeur en cours de dépressurisation initiale et réintroduit à contre-courant dans l'adsorbeur en cours de repressurisation. Pendant la phase finale de repressurisation, on envoie seulement de l'air à co-courant.

Figure 5 :

T       : 144 sec
n       : 6
T/N    : 24 sec
N       : successivement 2 puis 3
d1      : 60 sec
d2      : 12 sec
d3      : 36 sec
d4      : 12 sec
d5      : 24 sec
d7      : 48 sec
k       : 2

Dans cette réalisation, la durée de pompage (d7 = 48 sec) impose deux pompes (pompe 1 et pompe 2) fonctionnant l'une à un niveau relativement élevé de pression, l'autre à un niveau moins élevé. Leur durée de fonctionnement sur un adsorbeur est de 24 secondes chacune de sorte qu'elles fonctionnent toutes deux en continu.

Figure 6 :

T       : 120 sec
n       : 6
T/N    : 20 sec
N       : 3
d1      : 60 sec
d2      : 0 sec
d3      : 40 sec
d5      : 20 sec
d7      : 40 sec
k       : 2

Dans cette réalisation, où la pression maximale de cycle $P_M$ est égale ou seulement peu supérieure à la pression atmosphérique Pa, la dépressurisation est effectuée entièrement par pompage à l'aide de deux pompes (pompe 1 et pompe 2), chacune fonctionnant pendant un déphasage T/n. Il n'y a pas d'élution et toute la repressurisation s'effectue par prélèvement de gaz sur le débit de production.

Figure 7 :

```
T      : 120 sec
n      : 6
T/n    : 20 sec
N      : 3
d1     : 60 sec
d2     : 10 sec
d3     : 30 sec
d5     : 20 sec
d7     : 30 sec
k      : 2
```

Ici la durée de pompage d7 (30 secondes) excède le déphasage 20 secondes. Même si la réduction de pression était suffisamment modérée, il convient d'utiliser deux pompes, dont la première (pompe N° 1) fonctionne seulement pendant 10 secondes, alors que la seconde (pompe N° 2) sous pression plus réduite fonctionne pendant une durée de déphasage. Cette seconde pompe N° 2 fonctionne donc en continu, alors que la pompe N° 1 fonctionne à mi-temps. Il y a lieu de noter que la repressurisation s'effectue totalement à contre-courant, avec du gaz de dépressurisation initiale d'un autre adsorbeur (durée d'5 = 10 secondes), puis avec du gaz de production (durée d''5 = 10 secondes).

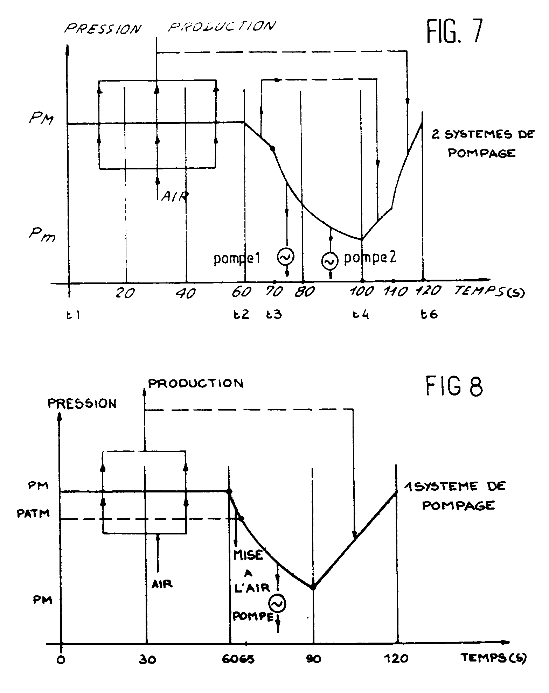

Figure 8 : (ne fait pas partie de l'invention)

```
T      : 120 sec
n      : 4
T/n    : 30 sec
N      : 2
d1     : 60 sec
d2     : 0 sec
d3     : 30 sec
d4     : 0 sec
d5     : 30 sec
d7     : 25 sec
k      : 1
```

Ici la durée de pompage d7 est inférieure à la durée de dépressurisation contre-courant car elle est précédée d'une étape de mise à l'air à contre-courant de l'adsorbeur.

Cette étape permet de commencer l'étape de pompage à partir de la pression atmosphérique.

| TABLEAU RECAPITULATIF | | | | | | | | |
|---|---|---|---|---|---|---|---|---|
| | Fig.1 | Fig.2 | Fig.3 | Fig.4 | Fig.5 | Fig.6 | Fig.7 | Fig.8 |
| $T_{(sec)}$ | 120 | 100 | 120 | 90 | 144 | 120 | 120 | 120 |
| n | 4 | 5 | 6 | 3 | 6 | 6 | 6 | 4 |
| T/n | 30 | 20 | 20 | 30 | 24 | 20 | 20 | 30 |
| N | 2 | 3 | 3 | 1 ou 2 | 2 ou 3 | 3 | 3 | 2 |
| $d1_{(sec)}$ | 60 | 60 | 60 | 40 | 60 | 60 | 60 | 60 |
| $d2_{(sec)}$ | 10 | 10 | 10 | 10 | 12 | 0 | 10 | 0 |
| $d3_{(sec)}$ | 20 | 10 | 30 | 10 | 36 | 40 | 30 | 30 |

(suite)

| TABLEAU RECAPITULATIF | | | | | | | |
|---|---|---|---|---|---|---|---|
| | Fig.1 | Fig.2 | Fig.3 | Fig.4 | Fig.5 | Fig.6 | Fig.7 | Fig.8 |
| $d4_{(sec)}$ | 10 | 10 | 10 | 10 | 12 | 0 | 0 | 0 |
| $d5_{(sec)}$ | 20 | 10 | 10 | 10 | 24 | 20 | 20 | 30 |
| $d6_{(sec)}$ | 0 | 0 | 0 | 10+10 | 0 | 0 | 0 | 0 |
| $d7_{(sec)}$ | 30 | 20 | 40 | 20 | 48 | 40 | 30 | 25 |
| k | 1 | 1 | 2 | 1 | 2 | 2 | 2 | 1 |

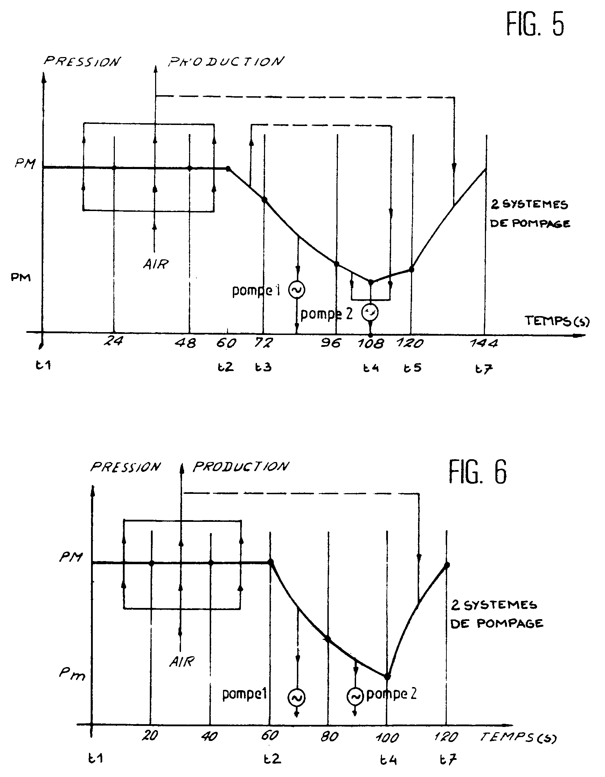

Du tableau ci-dessus, on constate que la durée de pompage d7 est toujours inférieure à la durée de l'étape de production d1. Par rapport à la durée totale d'un cycle T, cette durée de pompage est comprise entre 0,20 (cycle de la figure 2) et 0,33 (cycle de la figure 5) de la durée du cycle T.

**Revendications**

1. Procédé de production d'un gaz à teneur substantielle en oxygène, notamment à débit supérieur à 60 T/jour, par adsorption d'azote de l'air, procédé selon lequel, sur six adsorbeurs, on assure successivement, cycliquement selon une période T, sur chacun desdits adsorbeurs, avec déphasage de T/6 d'un adsorbeur au suivant :

   a) une étape de production d'oxygène à co-courant, de durée $\underline{x}$, à pression au moins égale à la pression atmosphérique, avec admission d'air au moins au cours d'une partie substantielle de ladite étape de production;
   b) une étape de dépressurisation, comprenant au moins dans sa partie finale, une dépressurisation à contre-courant qui se poursuit, le cas échéant, par une purge-élution par passage à contre-courant de gaz enrichi en oxygène; la pression minimale de cycle atteinte au cours de ladite étape de pompage étant $P_m$;
   c) une étape de repressurisation comprenant au moins une phase de repressurisation à contre-courant avec du gaz enrichi en oxygène,
   d) la durée de l'étape de production est supérieure au déphasage T/6, le nombre d'adsorbeurs en production simultanée pendant au moins une fraction de l'intervalle T/6 étant de trois;
   e) la somme des durées de la dépressurisation à contre-courant et de l'éventuelle purge-élution est inférieure à la durée de l'étape de production;
   caractérisé en ce que
   f) ladite dépressurisation à contre-courant de l'étape b) conduit à une pression sous atmosphérique et est obtenue à l'aide de deux systèmes de pompage, chacun étant adapté à un niveau de dépressurisation partielle et exerçant son action successivement sur un même adsorbeur au cours du pompage de durée $\underline{y}$, de sorte que T/6 < y ≤ T/3 .

2. Procédé de production d'oxygène selon la revendication 1, caractérisé en ce qu'on assure h) une dépressurisation à co-courant entre l'étape de production et l'étape de dépressurisation à contre-courant, de façon à fournir du gaz de purge pour la purge-élution éventuelle selon b) d'un autre adsorbeur.

3. Procédé de production d'oxygène selon la revendication 1, caractérisé en ce que l'on assure i) une dépressurisation à co-courant entre l'étape de production et l'étape de dépressurisation à contre-courant de façon à fournir du gaz de repressurisation partielle pour l'étape c) de repressurisation.

4. Procédé de production d'oxygène selon les revendications 2 et 3, caractérisé en ce qu'on assure d'abord la dépressurisation selon i) puis la dépressurisation selon h).

5. Procédé de production d'oxygène selon l'une quelconque des revendications 1 à 4, caractérisé en ce que le gaz enrichi en oxygène de l'étape b) et/ou de l'étape c) est de l'oxygène de production.

6. Procédé de production d'oxygène selon l'une quelconque des revendications 1 à 5, caractérisé en ce que l'étape de production s'effectue au moins en partie à pression maximale.

7. Procédé de production d'oxygène selon l'une quelconque des revendications 1 à 6, caractérisé en ce que l'étape de production s'effectue au moins en partie à pression croissante.

8. Procédé de production d'oxygène selon l'une quelconque des revendications 1 à 7, caractérisé en ce que la pression maximale de cycle $P_M$ est comprise entre la pression atmosphérique et $1,6.10^5$ Pascal, tandis que la pression minimale de cycle est comprise entre $0,2.10^5$ et $0,5.10^5$ Pascal.

## Claims

1. Process for producing a gas with a substantial oxygen content, notably at a rate of more than 60 T/day, by the adsorption of nitrogen from the air, wherein the following steps are carried out with six adsorbers cyclically over a period T, with a phase shift of T/6 from one adsorber to the next:

> a) a step of co-current oxygen production, of duration $\underline{x}$, at a pressure at least equal to atmospheric pressure, with an intake of air at least during a substantial part of said production step;
> b) a depressurisation step comprising, at least in its final stage, a counter-current depressurisation which is continued, if required, by elution/purging by passing in counter-current with oxygen-enriched gas; the minimum cycle pressure achieved during said pumping step being $P_m$;
> c) a repressurisation step comprising at least one phase of counter-current repressurisation with oxygen-enriched gas;
> d) the duration of the production step is greater than the phase shift T/6, the maximum number of adsorbers in simultaneous production during at least a fraction of the interval T/6 being three;
> e) the sum of the periods of counter-current depressurisation and possible elution/purging is less than the duration of the production step;
> characterised in that
> f) the counter-current pressurisation in step b) results in a pressure below atmospheric and is obtained by means of two pumping systems, each being adapted to a level of partial depressurisation and acting successively on the same adsorber during the pumping of duration $\underline{y}$, so that $T/6 < y \leq T/3$ .

2. Process for producing oxygen according to claim 1, characterised in that h) co-current depressurisation is carried out between the production step and the step of counter-current depressurisation so as to supply purging gas for the optional elution/purging according to b) of another adsorber.

3. Process for producing oxygen according to claim 1, characterised in that i) co-current depressurisation is carried out between the production step and the step of counter-current depressurisation, so as to supply partial repressurisation gas for the repressurisation step c).

4. Process for producing oxygen according to claims 2 and 3, characterised in that first of all the depressurisation according to i) is carried out, followed by the depressurisation according to h).

5. Process for producing oxygen according to any one of claims 1 to 4, characterised in that the oxygen-enriched gas from step b) and/or step c) is manufactured oxygen.

6. Process for producing oxygen according to any one of claims 1 to 5, characterised in that the production step is at least partly carried out at maximum pressure.

7. Process for producing oxygen according to any one of claims 1 to 6, characterised in that the production step is at least partly carried out at increasing pressure.

8. Process for producing oxygen according to any one of claims 1 to 7, characterised in that the maximum cycle pressure $P_m$ is between atmospheric pressure and $1.6 \cdot 10^5$ Pascal, whereas the minimum cycle pressure is between $0.2 \cdot 10^5$ and $0.5 \cdot 10^5$ Pascal.

## Patentansprüche

1. Verfahren zur Herstellung eines Gases mit einem wesentlichen Gehalt an Sauerstoff, insbesondere einem erhöhten Ausstoß von 60 T/Tag, durch Adsorption von Luftstickstoff, in dem man bei sechs Adsorbern nacheinander gemäß einer Zeitdauer T an jedem der Adsorber mit einer Phasenverschiebung T/6 eines Adsorbers folgendes sicherstellt:

a) Eine Stufe der Herstellung von Sauerstoff im Gleichstrom mit einer Dauer $\underline{x}$, einem Druck, der mindestens gleich dem atmosphärischen Druck ist, unter Einlaß von Luft mindestens während eines wesentlichen Teils dieser Herstellungsstufe;

b) eine Stufe der Druckverringerung auf Außendruck, die wenigstens in ihrem letzten Teil eine Druckverringerung im Gegenstrom umfaßt, welche gegebenenfalls mittels einer Spüleluierung durch Gegenstromführung zu einem mit Sauerstoff angereicherten Gas erfolgt, wobei der Minimaldruck des erreichten Zyklusses während dieser Pumpstufe $P_m$ ist,

c) eine Stufe der erneuten Druckerhöhung, die wenigstens eine Phase der erneuten Druckerhöhung im Gegenstrom mit einem mit Sauerstoff angereichertem Gas umfaßt,

d) die Dauer der Herstellungsstufe länger als die Phasenverschiebung T/6 ist, die maximale Anzahl der Adsorber, die gleichzeitig während mindestens eines Bruchteils des Intervalls T/6 in Produktion befindlich sind, drei beträgt;

e) Summe der Dauer der Druckverringerung und der gegebenenfalls durchgeführten Spüleluierung geringer als die Dauer der Herstellungsstufe ist, **dadurch gekennzeichnet**, daß

f) diese Druckverringerung im Gegenstrom zur Stufe b) und bei einem Druck unter Atmosphärendruck durchgeführt wird und erreicht wird mit Hilfe zweier Pumpsysteme, von denen jedes an ein Niveau der partiellen Druckverringerung angepaßt ist und seine Wirkung nacheinander auf einen gleichen Adsorber während des Pumpens mit der Dauer $\underline{y}$ derart ausübt, daß $T/6 < y \leq T/3$ ist.

2. Verfahren zur Herstellung von Sauerstoff nach dem Verfahren nach Anspruch 1, **dadurch gekennzeichnet**, daß man h) eine Druckverringerung im Gleichstrom zwischen der Herstellungsstufe und der Stufe der Druckverringerung im Gegenstrom derart sicherstellt, daß Gas zur Spülung für die Spüleluierung, gegebenenfalls nach b), eines anderen Adsorbers bereitgestellt wird.

3. Verfahren zur Herstellung von Sauerstoff nach Anspruch 1, **dadurch gekennzeichnet**, daß man i) eine Druckverringerung im Gleichstrom zwischen der Herstellungsstufe und der Stufe der Druckverringerung im Gegenstrom derart sicherstellt, daß Gas zur erneuten partiellen Druckerhöhung der Stufe c) der erneuten Druckerhöhung bereitgestellt wird.

4. Verfahren zur Herstellung von Sauerstoff nach den Ansprüchen 2 und 3, **dadurch gekennzeichnet**, daß man zunächst die Druckverringerung gemäß i), anschließend die Druckverringerung gemäß h) sicherstellt.

5. Verfahren zur Herstellung von Sauerstoff nach einem der vorangegangenen Ansprüche 1 bis 4, **dadurch gekennzeichnet**, daß das mit Sauerstoff angereicherte Gas der Stufe b) und/oder der Stufe c) der erzeugte Sauerstoff ist.

6. Verfahren zur Herstellung von Sauerstoff nach einem der Ansprüche 1 bis 5, **dadurch gekennzeichnet**, daß die Herstellungsstufe wenigstens teilweise bei maximalem Druck durchgeführt wird.

7. Verfahren zur Herstellung von Sauerstoff nach einem der Ansprüche 1 bis 6, **dadurch gekennzeichnet**, daß die Herstellungsstufe wenigstens teilweise bei steigendem Druck durchgeführt wird.

8. Verfahren zur Herstellung von Sauerstoff nach einem der Ansprüche 1 bis 7, **dadurch gekennzeichnet**, daß der maximale Druck des Zyklusses $P_M$ zwischen dem atmosphärischen Druck und $1,6 \times 10^5$ Pascal liegt, wohingegen der Minimaldruck des Zyklusses zwischen $0,2 \times 10^5$ und $0,5 \times 10^5$ Pascal liegt.

FIG. 1

FIG. 2

FIG. 3

2 SYSTEMES DE POMPAGE

FIG. 4

1 SYSTEME DE POMPAGE

# FIG. 5

PRESSION    PRODUCTION

PM

PM

AIR

pompe 1 $\sim$

pompe 2 $\sim$

2 SYSTEMES
DE POMPAGE

TEMPS (s)

24    48  60  72    96  108 120    144

t1              t2  t3        t4  t5      t7

# FIG. 6

PRESSION    PRODUCTION

PM

Pm

AIR

pompe1 $\sim$    $\sim$ pompe 2

2 SYSTEMES
DE POMPAGE

TEMPS (s)

20    40    60    80    100    120

t1              t2              t4    t7

FIG. 7

PRESSION   PRODUCTION

PM

Pm

AIR

pompe1   pompe2

20   40   60   70   80   100   110   120   TEMPS (S)

t1   t2  t3   t4   t6

2 SYSTEMES DE POMPAGE

FIG 8

PRODUCTION

PRESSION

PM

PATM

PM

AIR

MISE A L'AIR

POMPE

0   30   6065   90   120   TEMPS (S)

1 SYSTEME DE POMPAGE

13